(19) Europäisches Patentamt
European Patent Office
Office européen des brevets

(11) **EP 3 907 114 B1**

(12) **FASCICULE DE BREVET EUROPEEN**

(45) Date de publication et mention de la délivrance du brevet:
**05.07.2023 Bulletin 2023/27**

(21) Numéro de dépôt: **21172132.9**

(22) Date de dépôt: **04.05.2021**

(51) Classification Internationale des Brevets (IPC):
***B60W 30/18*** (2012.01)

(52) Classification Coopérative des Brevets (CPC):
**B60W 30/18072;** B60W 2520/10; B60W 2720/10

(54) **PROCÉDÉ DE GESTION DU RALENTISSEMENT D'UN VÉHICULE**

VERFAHREN ZUR STEUERUNG DER VERLANGSAMUNG EINES FAHRZEUGS

METHOD FOR MANAGING THE SLOWDOWN OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.05.2020 FR 2004570**

(43) Date de publication de la demande:
**10.11.2021 Bulletin 2021/45**

(73) Titulaire: **Renault s.a.s**
**92100 Boulogne Billancourt (FR)**

(72) Inventeur: **DAVINS-VALLDAURA, Joan**
**78150 LE CHESNAY (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**EP-A1- 2 781 722          EP-A1- 3 225 488**
**DE-A1-102014 204 763      US-A1- 2016 121 898**

## Description

### Domaine Technique de l'invention

L'invention concerne un procédé de gestion du ralentissement d'un véhicule automobile, notamment pour atteindre une vitesse de consigne strictement inférieure à la vitesse courante du véhicule. L'invention porte également sur un véhicule automobile équipé de moyens matériels et/ou logiciels configurés pour mettre en oeuvre un tel procédé de gestion.

### Etat de la technique antérieure

Les véhicules automobiles sont généralement équipés de régulateurs de vitesse, couramment dénommés "systèmes ACC". Les régulateurs de vitesse sont couplés à un groupe motopropulseur et à des moyens de freinage du véhicule de manière à contrôler la vitesse du véhicule autour d'une valeur de consigne. Ces consignes de vitesses peuvent être fournies par des moyens de détection et/ou des moyens de navigation couplés au régulateur de vitesse. Une telle consigne doit être respectée à partir d'une position donnée du véhicule sur la route. Par exemple, un moyen de détection peut identifier un panneau de signalisation tel qu'un panneau de limitation de vitesse. La vitesse maximale autorisée indiquée sur ce panneau pourra être utilisée pour calculer une nouvelle consigne de vitesse du véhicule. Cette consigne doit être respectée lorsque le véhicule arrive à hauteur du panneau. La consigne de vitesse peut également être calculée en fonction de différentes configurations routières détectés, par exemple la topologie de la route sur laquelle roule le véhicule, notamment le rayon de courbure de virage.

US2016/121898 décrit un régulateur de vitesse qui utilise un mode frein moteur ou un mode roue libre pour atteindre une vitesse de consigne.

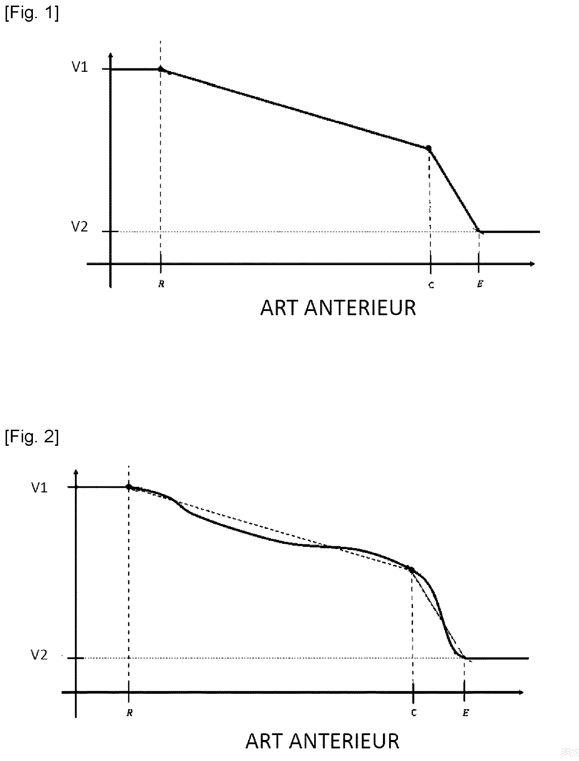

Les véhicules automobiles équipés de tels régulateurs de vitesse sont donc amenés à ralentir pour atteindre une vitesse de consigne. Les procédés de gestion du ralentissement du véhicule connus prévoient en général une première phase de maintien en roue libre ou en frein moteur du véhicule durant laquelle le véhicule ralentit faiblement, puis une deuxième phase de freinage durant laquelle les moyens de freinage du véhicule sont actionnés pour ralentir plus fortement le véhicule jusqu'à la vitesse de consigne. La figure 1 illustre théoriquement la vitesse d'un véhicule en fonction de sa position. Initialement et jusqu'à atteindre la position indiquée par R, le véhicule avance avec une vitesse égale ou proche d'une vitesse V1. Ensuite, entre la position R et la position C, intervient la première phase dite de maintien en roue libre et/ou en frein moteur du véhicule durant laquelle le véhicule ralentit faiblement. Ensuite, entre la position C et la position E, intervient la deuxième phase dite de freinage durant laquelle le véhicule ralentit plus fortement jusqu'à atteindre la vitesse de consigne V2. Enfin, à partir de la position E, le véhicule avance avec une vitesse égale ou proche de la vitesse V2.

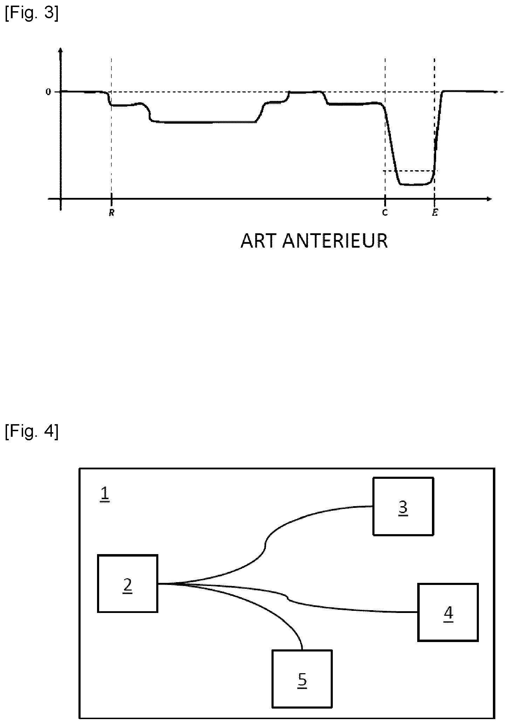

Toutefois, le profil théorique de vitesse représenté sur la figure 1 est généralement éloigné de la réalité. En effet, des conditions extérieures telles que le relief de la route, c'est-à-dire le profil ascendant ou descendant de la route, provoque des décélérations ou des accélérations qui se superposent aux consignes de maintien en roue libre ou en frein moteur puis aux consignes de freinage. Le profil réel de vitesse suivi par le véhicule peut donc en pratique être plus proche de celui représenté sur la figure 2. On observe que la vitesse du véhicule s'écarte plus ou moins de la vitesse théorique. Ce profil de vitesse étant dépendant de conditions extérieures au véhicule, il s'avère être différent à chaque exécution du procédé de gestion du ralentissement du véhicule. Comme illustré sur la figure 3, ce phénomène conduit aussi à des variations importantes de l'accélération subie par le véhicule, ce qui génère des secousses. De plus, la phase de maintien en roue libre ou en frein moteur du véhicule peut être interrompue prématurément.

Par exemple, lorsque la route se met à descendre lors de la phase de maintien en roue libre ou en frein moteur du véhicule, le véhicule ne décélère pas autant que prévu et un freinage plus violent doit être prévu dans la phase de freinage pour atteindre la vitesse de consigne V2. Alternativement, la phase de freinage peut être anticipée pour éviter de fortes décélérations mais dans ce cas, l'énergie cinétique du véhicule est au moins partiellement gâchée. Dans certains cas, la phase de freinage peut conduire à un ralentissement trop important du véhicule (par exemple si la phase de freinage est conjuguée avec le franchissement d'une côte). Dans ce cas la phase de freinage doit être suivie d'une action motrice du véhicule pour atteindre la vitesse de consigne V2.

Finalement, les procédés connus de gestion du ralentissement du véhicule présentent des inconvénients lorsqu'ils sont exécutés alors que le véhicule subit des accélérations ou décélérations provoquées par des conditions extérieures au véhicule. D'une part, ils provoquent secousses qui nuisent au confort des passagers. D'autre part ces variations de vitesse surprennent les autres automobilistes. Enfin, ils provoquent une consommation importante des ressources de freinage et/ou des ressources motrices du véhicule.

**Présentation de l'invention**

Le but de l'invention est de fournir un procédé de gestion du ralentissement d'un véhicule remédiant aux inconvénients ci-dessus et améliorant les procédés de gestion connus de l'art antérieur.

Plus précisément, un premier objet de l'invention est un procédé de gestion du ralentissement d'un véhicule qui produise des accélérations de plus faible amplitude.

Un second objet de l'invention est un procédé de gestion du ralentissement d'un véhicule qui confère au véhicule un comportement bien accepté des autres automobilistes.

Un troisième objet de l'invention est un procédé de gestion du ralentissement d'un véhicule économe en énergie.

**Résumé de l'invention**

- L'invention se rapporte à un procédé de gestion du ralentissement d'un véhicule automobile, le procédé de gestion comprenant :

  - une étape de détection et/ou de calcul d'une vitesse de consigne à atteindre à une position évènement ultérieure du véhicule, la vitesse de consigne étant strictement inférieure à une vitesse courante du véhicule, puis
  - une étape de calcul d'une vitesse théorique dudit véhicule, puis
  - une étape de comparaison de la vitesse courante dudit véhicule avec la vitesse théorique, puis une étape de gestion de la vitesse du véhicule. L'étape de gestion de la vitesse du véhicule comprend :

    - une première sous-étape en roue libre ou en frein moteur dudit véhicule si la vitesse courante dudit véhicule est comprise dans une plage de vitesse autour de ladite vitesse théorique,
    - une deuxième sous-étape d'action motrice dudit véhicule si la vitesse courante du véhicule est strictement inférieure à ladite plage de vitesse,
    - une troisième sous-étape de freinage dudit véhicule si la vitesse courante du véhicule est strictement supérieure à ladite plage de vitesse,

  puis une étape de freinage du véhicule pour atteindre la vitesse de consigne.

Ladite première sous-étape peut être une étape de gestion de la vitesse du véhicule en boucle ouverte, et/ou ladite deuxième sous-étape peut être une étape de gestion de la vitesse du véhicule en boucle fermée, et/ou ladite troisième sous-étape peut être une étape de gestion de la vitesse du véhicule en boucle fermée.

Ladite vitesse théorique peut être calculée en fonction d'une première constante de décélération dudit véhicule, et en fonction d'une distance séparant la position courante dudit véhicule de la position ultérieure du véhicule à laquelle la vitesse de consigne doit être atteinte.

Le procédé de gestion peut comprendre une étape de régulation de la vitesse dudit véhicule pour maintenir une vitesse prédéfinie préalablement à l'étape de détection et/ou de de calcul d'une vitesse de consigne.

Ladite vitesse théorique peut être une fonction décroissante de la position du véhicule.

L'étape de freinage du véhicule peut être déclenchée dès que la vitesse courante du véhicule devient supérieure ou égale à une vitesse limite calculée en fonction d'une deuxième constante de décélération, et en fonction d'une distance séparant la position courante dudit véhicule de la position ultérieure du véhicule à laquelle la vitesse de consigne doit être atteinte.

Ladite plage de vitesse peut être définie comme l'ensemble des vitesses dudit véhicule dont la différence avec ladite vitesse théorique est inférieure ou égale à une valeur seuil prédéfinie.

Une transition entre la première sous-étape et la deuxième sous étape peut être régie par une hystérésis, et/ou une transition entre la première sous-étape et la troisième sous étape peut être régie par une hystérésis.

L'invention se rapporte également à un véhicule automobile comprenant des moyens matériels et/ou logiciels configurés pour mettre en oeuvre le procédé de gestion tel que défini précédemment.

L'invention se rapporte également à un produit programme d'ordinateur comprenant des instructions de code de programme enregistrées sur un support lisible par ordinateur pour mettre en oeuvre les étapes du procédé de gestion tel que défini précédemment lorsque ledit programme fonctionne sur un ordinateur. L'invention se rapporte également à un produit programme d'ordinateur téléchargeable depuis un réseau de communication et/ou enregistré sur un support de données lisible par un ordinateur et/ou exécutable par un ordinateur comprenant des instructions qui, lorsque le programme est exécuté par l'ordinateur, conduisent celui-ci à mettre en oeuvre le procédé de gestion tel que défini précédemment.

L'invention se rapporte également à un support d'enregistrement de données, lisible par un ordinateur, sur lequel est enregistré un programme d'ordinateur comprenant des instructions de code de programme de mise en oeuvre du procédé de gestion tel que défini précédemment. L'invention se rapporte également à un support d'enregistrement lisible par ordinateur comprenant des instructions qui, lorsqu'elles sont exécutées par un ordinateur, conduisent celui-ci à mettre en oeuvre le procédé de gestion tel que défini précédemment.

L'invention se rapporte également à un signal d'un support de données, portant le produit programme d'ordinateur tel que défini précédemment.

**Présentation des figures**

Ces objets, caractéristiques et avantages de la présente invention seront exposés en détail dans la description suivante d'un mode de réalisation particulier fait à titre non-limitatif en relation avec les figures jointes parmi lesquelles :

[Fig. 1] La figure 1 est un graphique représentant la vitesse théorique d'un véhicule selon l'état de la technique en fonction de sa position.
[Fig. 2] La figure 2 est un graphique représentant la vitesse réelle du véhicule selon l'état de la technique en fonction de sa position.
[Fig. 3] La figure 3 est un graphique représentant l'accélération réelle du véhicule selon l'état de la technique en fonction de sa position.
[Fig. 4] La figure 4 est une vue schématique d'un véhicule automobile selon un mode de réalisation de l'invention.
[Fig. 5] La figure 5 est un synoptique d'un procédé de gestion du ralentissement d'un véhicule selon un mode de réalisation de l'invention.
[Fig. 6] La figure 6 est un graphique représentant la vitesse réelle du véhicule selon un mode de réalisation de l'invention en fonction de sa position.
[Fig. 7] La figure 7 est un graphique représentant l'accélération réelle du véhicule selon un mode de réalisation de l'invention en fonction de sa position.

**Description détaillée**

La figure 4 illustre schématiquement un véhicule 1 automobile selon un mode de réalisation de l'invention. Le véhicule 1 peut être de toute nature. Notamment, il peut être par exemple un véhicule particulier, un véhicule utilitaire, un camion ou un bus. Le véhicule 1 comprend une unité de contrôle de vitesse 2 que l'on pourrait dénommer régulateur de vitesse, ou encore système ACC d'après l'anglicisme " Adaptative Cruise Control". Le véhicule 1 comprend en outre un groupe motopropulseur 3, un système de freinage 4 et un système de navigation 5, tous reliés directement ou indirectement à l'unité de contrôle de vitesse 2. L'unité de contrôle de vitesse 2 comprend une mémoire, un microprocesseur et des entrées sorties pour émettre et/ou recevoir des signaux. Notamment, l'unité de contrôle de vitesse 2 peut recevoir des signaux émis par le système de navigation 5. Il peut aussi émettre des ordres de commande au groupe motopropulseur 3 pour accélérer le véhicule (c'est-à-dire pour augmenter sa vitesse) et au système de freinage 4 pour ralentir, autrement dit décélérer, le véhicule.

Le groupe motopropulseur 3 peut notamment comprendre un moteur à combustion et/ou un moteur électrique. Le groupe moto propulseur 3 peut appliquer un couple moteur pour accélérer le véhicule ou au contraire un couple résistant, également dénommé frein moteur.

Le système de freinage peut comprendre une unité de commande, également dénommée unité VDC d'après l'anglicisme "Vehicle Dynamic Control" et des freins comme par exemple des freins à disque ou des freins à tambour. L'unité de commande peut convertir un signal d'ordre de commande en une augmentation de pression hydraulique pour actionner les freins du véhicule. L'action des freins du véhicule peut produire un couple résistant plus important que le frein moteur.

Le système de navigation 5 peut comprendre des moyens de détection tels que par exemple des radars, caméras ou lidar. Ces moyens de détection peuvent détecter des éléments de signalisation d'une route tels que des panneaux de signalisation, en particulier des panneaux de limitation de vitesse. Ils peuvent aussi détecter d'autres types de panneaux comme des panneaux danger ou des panneaux stop. Ils peuvent aussi détecter des feux tricolores. Ils peuvent également détecter ou reconnaitre des configurations routières particulières telles que des intersections, des ronds-points, des marquages au sol, des ralentisseurs. Ils peuvent aussi détecter la forme de la route sur laquelle circule le véhicule, notamment des virages et en particulier le rayon de courbure de ces virages. En variante ou en complément, ces informations peuvent également être enregistrées dans une mémoire du système de navigation. Dans ce cas, le véhicule dispose alors d'un moyen de géolocalisation pour positionner ces éléments de signalisation ou ces configurations routières dans son environnement. La position de ces éléments de signalisation ou ces configurations routières correspondra donc à des positions évènements E. Une anticipation en distance par rapport à la localisation exacte de ces éléments de signalisation ou de ces configurations routières pourra également être prise en compte dans la détermination de la position événement E de manière par exemple à pallier à une imprécision des capteurs.

De manière générale, le système de navigation peut être informé de divers objets statiques dans l'environnement du véhicule. Ces objets peuvent être qualifiés d'indicateurs de vitesse dans la mesure où leur observation conduirait un automobiliste à adapter la vitesse de son véhicule. Ils sont statiques par opposition aux autres véhicules et/ou cibles mouvantes qui peuvent être prises en compte par un module spécifique de l'unité de contrôle de vitesse 2.

La mémoire de l'unité de contrôle de vitesse 2 comprend des instructions de code de programme qui, lorsqu'elles sont exécutées par le microprocesseur de l'unité de contrôle de vitesse, conduisent celui-ci à mettre en oeuvre un procédé de gestion du ralentissement du véhicule selon un mode de réalisation de l'invention.

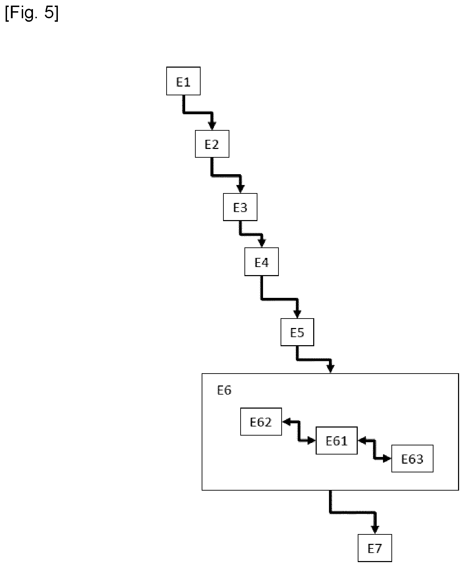

Un mode de réalisation du procédé de gestion du ralentissement du véhicule 1 va maintenant être décrit en relation avec la figure 5. Le procédé peut être décomposé en sept étapes E1, E2, E3, E4, E5, E6, E7. Ces étapes peuvent être réalisées successivement et renouvelées à chaque fois que le procédé de gestion est mis en oeuvre.

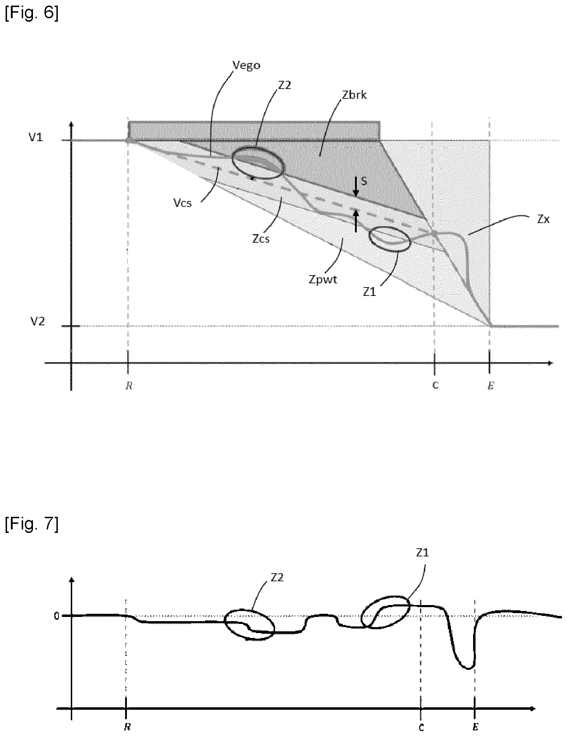

Dans une première étape E1, on régule la vitesse du véhicule 1 pour maintenir une vitesse prédéfinie V1. La vitesse prédéfinie V1 peut être par exemple une première vitesse de consigne choisie par le conducteur du véhicule ou choisie de manière autonome par le véhicule. La vitesse prédéfinie V1 peut être une vitesse fixe dans le temps. Le couple moteur fourni par le groupe motopropulseur peut être modifié ou adapté en temps réel pour maintenir le véhicule 1 à une vitesse sensiblement égale à la vitesse prédéfinie V1. En remarque, de faibles variations de vitesse autour de la vitesse prédéfinie V1 peuvent toutefois se produire. Elles peuvent êtres dues par exemple au relief de la route et/ou à la force du vent. La figure 6 illustre l'évolution de la vitesse réelle du véhicule 1 en fonction de sa position. La première étape E1 est donc exécutée jusqu'à ce que le véhicule atteigne la première position indiquée par R sur le graphique de la figure 6. La première position R est une entrée du procédé de gestion du ralentissement du véhicule et correspond à la distance permettant d'atteindre la position événement E à la vitesse de consigne V2 avec une décélération (accélération négative) naturelle moyenne, cette décélération étant fonction notamment du profil de la route et de l'aérodynamisme. La première position R est donc déterminée en fonction de la décélération naturelle que subit le véhicule 1 jusqu'à la position événement E. La première position R peut être déterminée sur la base d'information fournie par le système de navigation 5. Par exemple, la première position R peut être déterminée en tenant compte de la topologie de la route entre la première position R et la position événement E.

Ensuite dans une deuxième étape E2, on détecte et/ou on calcule une vitesse de consigne V2 à atteindre à une position événement E ultérieure du véhicule 1. Par "position ultérieure", on comprend une position future du véhicule, c'est-à-dire une position que le véhicule va atteindre en poursuivant sa route. La vitesse de consigne V2 est strictement inférieure à la vitesse courante du véhicule 1, c'est-à-dire à la vitesse V1. Le véhicule 1 doit donc ralentir pour passer de la vitesse V1 à la vitesse V2 entre la position R et la position événement E. La position événement E désigne donc la position à laquelle la vitesse de consigne V2 doit être atteinte. Par exemple, lors de cette étape les moyens de détection du système de navigation 5 peuvent détecter un panneau de limitation de vitesse à l'avant du véhicule. La vitesse imposée par ce panneau de limitation de vitesse peut être lue par le moyen de détection et communiquée à l'unité de contrôle de vitesse 2. Pour respecter la limitation de vitesse, le véhicule doit ralentir. Par exemple il doit passer d'une vitesse V1 égale à 90km/h à une vitesse V2 égale à 50km/h. La position événement E peut par exemple correspondre à la position du panneau de limitation de vitesse. En variante, la vitesse de consigne V2 peut être calculée suite à la détection de tout autre élément de signalisation et/ou suite à la détection d'une configuration routière comme cela a été présenté précédemment.

En variante ou en complément on peut calculer la vitesse de consigne V2 en fonction de données fournies par le système de navigation 5. A cet effet, le système de navigation 5 peut envoyer un message à l'unité de contrôle de vitesse 2 indiquant par exemple la distance séparant le véhicule 1 de la position événement E, la vitesse de consigne V2, et éventuellement la nature de l'objet imposant conduisant à imposer la vitesse de consigne V2 (par exemple un panneau de limitation de vitesse ou une configuration routière comme expliqué plus haut). Le système de navigation 5 peut également envoyer à l'unité de contrôle de vitesse 2 des informations portant sur la topologie de la route, c'est-à-dire la pente de la route, entre la position actuelle du véhicule 1 et la position événement E afin de calculer une décélération naturelle du véhicule 1 entre ces deux positions.

De manière facultative, et notamment si la topologie le permet, par exemple si la route est sans inclinaison et sans virage, dans une troisième étape E3, on met le véhicule 1 en roue libre ou en frein moteur. Autrement dit, on coupe la régulation de vitesse autour de la vitesse prédéfinie V1 et on laisse le véhicule ralentir sur sa lancée. Lorsque le véhicule 1 est en roue libre, le moteur du véhicule n'est pas entraîné en rotation par l'énergie cinétique du véhicule. Le ralentissement du véhicule peut être donc obtenu principalement par l'action de l'air sur le véhicule et par sa résistance au roulement. Lorsque le véhicule 1 est en frein moteur, le moteur du véhicule est entraîné en rotation par l'énergie cinétique du véhicule. La rotation du moteur génère un couple résistif qui s'additionne à la résistance causée par l'action de l'air sur le véhicule et à sa résistance au roulement. Le ralentissement du véhicule peut donc être plus important lorsqu'il est en frein moteur plutôt qu'en roue libre. Le frein moteur reste néanmoins limité, par exemple, sur un véhicule thermique, l'accélération négative est limitée à environ -300Nm exprimée en termes de couple au niveau des roues.

Lorsque le véhicule est en roue libre ou en frein moteur, le groupe motopropulseur ne fournit aucune action motrice et les freins du véhicule du ne sont pas activés. En fonction d'un choix de prestation souhaité, le véhicule peut donc être mis en roue libre ou en frein moteur. Avantageusement, le frein moteur peut être utile pour recharger une batterie du véhicule. L'énergie cinétique du véhicule est alors convertie en énergie chimique qui peut être stockée et réutilisée ultérieurement.

La troisième étape E3 est déclenchée lorsque le véhicule atteint la position indiquée par R sur la figure 6. La troisième étape E3 ne doit pas nécessairement être réalisée directement à la suite de la deuxième étape E2. En particulier, si le système de navigation détecte ou calcule suffisamment à l'avance la vitesse de consigne V2 à atteindre à la position E (par exemple parce que la portée des moyens de détection est très importante), il peut être opportun de maintenir la régulation de vitesse présentée à l'étape E1 sur une certaine distance avant de déclencher la troisième étape E3. Autrement dit, la deuxième étape E2 peut être exécutée au cours de la première étape E1.

Dans une quatrième étape E4, on calcule une vitesse théorique Vcs du véhicule 1 lorsqu'il est en roue libre ou lorsqu'il subit l'effet d'un frein moteur. Pour ce calcul, on considère que le véhicule est en roue libre ou en frein moteur depuis la troisième étape E3, c'est-à-dire depuis la position R. La troisième étape E3 étant facultative, la quatrième étape E4 est préférentiellement déclenchée lorsque le véhicule atteint la position indiquée par R sur la figure 6.

La vitesse théorique Vcs est une fonction décroissante de la position du véhicule 1. Sur la figure 6, la vitesse Vcs est représentée en première approximation comme une fonction linéaire décroissante de la position du véhicule 1. En variante, cette fonction décroissante pourrait ne pas être linéaire. La vitesse théorique Vcs peut être calculée en fonction d'une première constante de décélération acs du véhicule 1 et en fonction d'une distance Dego séparant la position courante dudit véhicule de la position E. La relation entre la position, la vitesse et la première constante de décélération acs peut être modélisée par le système suivant.

[Math 1]

$$\begin{cases} V_{cs}(t) = V_1 + a_{cs} * t \\ D_{init} - D_{ego}(t) = V_1 * t + 0.5 * a_{cs} * t^2 \end{cases}$$

dans lequel :

- Vcs(t) désigne la vitesse théorique du véhicule à un instant t,
- V1 désigne la vitesse dudit véhicule au début la troisième étape E3,
- Dinit désigne la distance séparant la position R de la position E,
- Dego(t) désigne la distance séparant la position du véhicule à l'instant t de la position E,
- acs désigne la première constante de décélération.

Ainsi, la vitesse théorique Vcs peut être calculée selon la formule:

[Math 2]

$$V_{cs}(t) = \sqrt{(V_1^2 + 2(D_{init} - D_{ego}(t))a_{cs})}$$

Le calcul de la vitesse théorique Vcs est donc réalisée en continu lors de l'étape E4. A l'issue de la quatrième étape E4, on dispose donc de la vitesse théorique du véhicule en fonction de sa position relativement à la position E. Cette vitesse théorique peut correspondre à la vitesse que suivrait le véhicule 1 s'il était constamment soumis à une décélération égale à la valeur de acs. La valeur de acs peut être définie par calibration et peut dépendre notamment des caractéristiques de résistance au roulement et/ou d'aérodynamisme du véhicule. Cette valeur peut être choisie par exemple de sorte à correspondre à un couple résistif de l'ordre de 20Nm. Cette valeur est indépendante de la pente de la route sur laquelle se trouve le véhicule 1.

Dans une cinquième étape E5, on compare la vitesse courante Vego du véhicule 1 avec la vitesse théorique Vcs. Par vitesse courante, on comprend la vitesse réelle ou autrement dit la vitesse effective du véhicule 1. La vitesse courante Vego peut différer de la vitesse théorique Vcs par exemple si la route présente des montées et/ou des descentes et/ou en présence de vent. Le résultat de cette comparaison est ensuite exploité lors de la sixième étape E6.

Dans la sixième étape E6, on gère (ou autrement dit on supervise avec ou sans régulation) la vitesse du véhicule 1. Cette gestion est obtenue au moyen de différentes sous-étapes E61, E62, E63 de la sixième étape E6. Cette régulation vise à maintenir une vitesse du véhicule la plus proche possible de la vitesse théorique Vcs calculée lors de la quatrième étape E4.

Dans une première sous-étape E61, si la vitesse courante Vego est comprise dans une plage de vitesse Zcs autour de ladite vitesse théorique Vcs, on met ou maintient le véhicule en roue libre ou on met ou maintient le véhicule en frein moteur. Dans une deuxième sous-étape E62, si la vitesse courante Vego est strictement inférieure à la plage de vitesse Zcs, on active le groupe motopropulseur 3. Dans une troisième sous-étape E63, si la vitesse courante Vego du véhicule est strictement supérieure à la plage de vitesse Zcs, on freine le véhicule avec son système de freinage 4. Lors de l'activation du système de freinage 4, la décélération est plus intense qu'en frein moteur. En effet, la décélération est réalisée préférentiellement en hydraulique, ainsi sur un moteur thermique l'accélération négative peut être de l'ordre de -2000 à -3000 Nm exprimée en termes de couple au niveau des roues.

Le procédé de gestion du ralentissement du véhicule 1 automobile, comprend donc

- une étape E6 de gestion de la vitesse du véhicule comprenant:

    - une première sous-étape E61 en roue libre ou en frein moteur dudit véhicule si la vitesse courante Vego dudit véhicule est comprise dans une plage de vitesse P autour de ladite vitesse théorique Vcs,
    - une deuxième sous-étape E62 d'action motrice dudit véhicule pour accélérer le véhicule si la vitesse courante Vego du véhicule est strictement inférieure à ladite plage de vitesse,
    - une troisième sous-étape E63 de freinage dudit véhicule avec des moyens de freinage du véhicule si la vitesse courante Vego du véhicule est strictement supérieure à ladite plage de vitesse.

La plage de vitesse Zcs, ou corridor Zcs, est notamment représentée sur la figure 6. La plage de vitesse Zcs étant définie autour de la vitesse théorique Vcs, elle dépend de la position du véhicule relativement à la position E. La plage Zcs peut être définie comme l'ensemble des vitesses du véhicule dont la différence avec la vitesse théorique Vcs est inférieure ou égale à une valeur seuil S prédéfinie. Ce seuil S peut être défini par paramétrage du véhicule en fonction de la prestation souhaitée. Il peut par exemple être de l'ordre de grandeur de 5km/h ou de 10 km/h.

En relation avec la figure 6, une zone de vitesse Zpwt peut être définie pour des vitesses strictement inférieures à la plage de vitesse Vcs. Si la vitesse et la position du véhicule correspondent à la zone de vitesse Zpwt, comme cela apparait dans la zone identifiée par Z1, alors on active le groupe motopropulseur 3 conformément à la deuxième sous-étape E62. De même, une zone de vitesse Zbrk peut être définie pour des vitesses strictement supérieures à la plage de vitesse Vcs. Si la vitesse et la position du véhicule correspondent à la zone de vitesse Zbrk, comme cela apparait dans la zone identifiée par Z2, alors on freine le véhicule avec son système de freinage 4 conformément à la troisième sous-étape E63.

La première sous-étape E61 peut être une étape de gestion de la vitesse du véhicule en boucle ouverte. C'est-à-dire qu'aucune action correctrice n'est appliquée pour que le véhicule suive une vitesse donnée, seule la supervision est exercée sans régulation. Au contraire, la deuxième sous-étape E62 et la troisième sous-étape E63 peuvent être des étapes de gestion de la vitesse du véhicule en boucle fermée, c'est-à-dire qu'on applique une action correctrice au véhicule de sorte à ce que sa vitesse se rapproche de la vitesse théorique Vcs.

On comprend donc de ce qui précède qu'au cours de la décélération visant à réduire la vitesse du véhicule de la vitesse V1 à la vitesse V2, une ou plusieurs itérations des sous-étapes E61, E62, E63 peuvent se produire. Pour améliorer le confort des passagers du véhicule, la transition entre la première sous-étape E61 et la deuxième sous étape E62 peut être régie par une hystérésis. De même, la transition entre la première sous-étape E61 et la troisième sous étape E63 peut être régie par une hystérésis. La plage de vitesse Zcs et les zones de vitesses Zbrk, Zpwt peuvent alors être délimitées par quatre seuils de vitesse S11, S12, S21, S22 avec S11 strictement supérieur à S12 et S21 strictement supérieur à S22. Si la vitesse courante Vego du véhicule est strictement supérieure à la vitesse théorique Vcs plus le seuil S11, alors on freine le véhicule conformément à la troisième sous-étape E63. La sous-étape E63 est ensuite maintenue tant que la vitesse courante du véhicule est strictement supérieure à la vitesse théorique Vcs plus le seuil S12. De même, si la vitesse courante Vego du véhicule est strictement inférieure à la vitesse théorique Vcs moins le seuil S21, alors on accélère le véhicule conformément à la deuxième sous-étape E62. La sous-étape E62 est ensuite maintenue tant que la vitesse courante du véhicule est strictement inférieure à la vitesse théorique Vcs moins le seuil S22. On évite ainsi des transitions intempestives entre les sous-étapes E61, E62 et E63. Les seuils de vitesse S11 et S21 peuvent éventuellement être égaux, par exemple être fixés à une valeur de 10 km/h ou 15 km/h, ou encore 5 m/s. De même, les seuils de vitesse S12 et S22 peuvent éventuellement être égaux. Ils peuvent par exemple être fixés à une valeur de 5 km/h ou 10 km/h, ou encore 4 m/s.

Les étapes E4, E5 et E6 sont donc successives car chacune nécessite la sortie de la précédente mais elles s'appliquent en continu à partir de la position R et jusqu'au déclenchement de la septième étape E7, c'est-à-dire pendant le temps où le véhicule circule entre la première position R et une deuxième position C.

Ensuite, dans une septième étape E7, on freine le véhicule au moyen du système de freinage 4 pour atteindre la vitesse de consigne V2. Préférentiellement, ce freinage en septième étape E7 est hydraulique, cependant sur véhicule électrique (voire hybride si la batterie le permet) le freinage peut être électrique puisque si l'état de charge le permet une accélération négative jusqu'à par exemple -7000 Nm en terme de couple aux roues peut être obtenue en freinage récupératif . La septième étape E7 peut être déclenchée dès que la vitesse courante Vego du véhicule 1 devient supérieure ou égale à une vitesse limite calculée en fonction d'une deuxième constante de décélération abrk, et en fonction de la distance Dego séparant la position courante du véhicule de la position événement E. En relation avec la figure 6, la septième étape E7 est déclenchée dès que le véhicule atteint la deuxième position définie par C. La deuxième position C correspond donc à la position à laquelle se trouve le véhicule 1 lorsque sa vitesse courante Vego devient supérieure ou égale à ladite vitesse limite. Le véhicule 1 évolue alors dans une zone de vitesse définie par Zx sur la figure 6, cette zone de vitesse Zx est ici par exemple représentée par une surface triangulaire en figure 6 avec un premier sommet ayant pour abscisse la distance au point événement E et pour ordonnée la vitesse de consigne V2, un deuxième sommet ayant pour abscisse la distance au point événement E et pour ordonnée la vitesse V1 et le troisième sommet correspondant à la jonction entre l'iso-vitesse V1 et la droite de pente la décélération abrk passant par le premier sommet. La droite passe donc par le point ayant pour abscisse la deuxième position C et pour ordonnée ladite vitesse limite. La deuxième position C est donc franchie lors du franchissement de cette droite de pente la décélération abrk, puis le véhicule 1 rejoindra la position événement E en tangentant cette droite, voire en la dépassant (décélération plus intense) légèrement, en restant dans la zone Zx. Alternativement la zone Zx pourrait par exemple être un trapèze, s'inscrivant dans la surface triangulaire définie précédemment mais délimité verticalement entre les axes verticaux passant par la deuxième position C et la position événement E. La sixième étape E6 s'arrête lorsque la septième étape E7 est déclenchée. Autrement dit, on ne peut plus réguler la vitesse du véhicule 1 conformément à l'étape E6 lorsque le véhicule 1 se situe entre la deuxième position C et la position événement E. Par conséquent, on reste dans la zone de vitesse Zx jusqu'à atteindre la position événement E.

La deuxième constante de décélération abrk peut être strictement supérieure à la première constante de décélération acs. La deuxième constante de décélération abrk peut être déterminée en fonction de la décélération que les passagers acceptent généralement de supporter lors d'un freinage. La décélération du véhicule lors de la septième étape E7 est donc globalement plus importante que lors de la sixième étape E6. On obtient ainsi une prestation reproduisant un comportement ordinaire d'un automobiliste. En effet, si l'étape E6 devait être prévue jusqu'à atteindre la vitesse de consigne V2, elle devrait être fortement anticipée pour s'assurer que la décélération obtenue en roue libre ou en frein moteur suffise à atteindre la vitesse de consigne V2. Dans ce cas, les autres automobilistes pourraient être surpris où s'impatienter en constatant un ralentissement aussi précoce.

A titre d'exemple, la septième étape E7 peut être déclenchée dès que l'inégalité suivante est vérifiée.

[Math 3]

$$V_{ego}(t) > \sqrt{(V_2^2 - 2 * D_{ego}(t) * a_{brk})}$$

dans laquelle :

- Vego(t) désigne la vitesse courante du véhicule à un instant t,
- V2 désigne la vitesse de consigne à atteindre à la position E,
- Dego(t) désigne la distance séparant la position du véhicule à l'instant t de la position E,
- abrk désigne la deuxième constante de décélération.

Finalement, le procédé de gestion peut être calibré en ajustant un nombre limité de paramètres qui sont la première constante de décélération acs, la deuxième constante de décélération abrk et le seuil S. Pour introduire une hystérésis entre les sous-étapes E61, E62 et 63, les quatre seuils S11, S12, S21 et S22 peuvent être également calibrés. Il existe donc au plus six paramètres à définir par calibration ce qui rend la mise au point du procédé de gestion particulièrement aisée.

Avantageusement, on peut définir différents modes de fonctionnement du véhicule, comme par exemple un mode dit "économique", un mode dit "normal" et un mode dit "sport". A chacun de ces modes peuvent être affectées différentes valeurs des paramètres acs, abrk, S11, S12, S21 et S22. Le conducteur du véhicule peut ensuite simplement sélectionner un mode de fonctionnement du véhicule pour obtenir le comportement souhaité de son véhicule.

A titre d'exemple, on peut définir les valeurs suivantes :

[Table 1]

| mode | acs | abrk |
|------|-----|------|
| normal | -0.35m/s2 | -1m/s2 |
| économique | -0.25m/s2 | -1m/s2 |
| sport | -0.5m/s2 | -1.5m/s2 |

En fonction du mode de fonctionnement choisi, le position R sera donc plus ou moins éloigné de la position E.

Grâce à l'invention, la décéleration du véhicule est plus proche de la décélération théorique du véhicule. Les passagers du véhicule ressentent des variations d'accélérations plus modérées. Le graphique de la figure 7 illustre notamment l'accélération du véhicule en fonction de sa position. Comparativement au graphique illustré sur la figure 3, on constate que l'écart entre l'accélération minimale et l'accélération maximale au cours du ralentissement du véhicule est plus faible avec un procédé de gestion du ralentissement selon l'invention. Le freinage et l'activation du groupe motopropulseur (identifiés respectivement par les zones Z2 et Z1 sur la figure 7) au cours de la sixième étape E6 permettent donc de réduire l'intensité de la décéleration au cours de la septième étape E7. Les passagers ressentent donc moins de secousses et leur confort est amélioré. On obtient ainsi un accostage en douceur à la vitesse de consigne et sans être trop impacté par le profil ascendant ou descendant de la route.

Grâce à l'invention, on peut rétablir au cours d'une même décéleration une phase durant laquelle le véhicule est en roue libre ou en frein moteur, même après avoir activé ponctuellement le groupe motopropulseur ou les freins. On peut ainsi accroître la durée durant laquelle le véhicule progresse en roue libre ou en frein moteur ce qui permet d'économiser le moteur ou les freins du véhicule.

L'implémentation du procédé de gestion selon l'invention ne nécessite qu'une modification du logiciel chargé en mémoire de l'unité de contrôle de vitesse 2. Il est donc relativement peu couteux de déployer cette solution. Cette invention pourra être appliquée dans tout domaine où un asservissement direct d'une vitesse est réalisé, impliquant ainsi des corrections nombreuses en temps réel et donc une perte énergétique.

## Revendications

1.  Procédé de gestion du ralentissement d'un véhicule (1) automobile, **caractérisé en ce qu'**il comprend :

    - une étape (E2) de détection et/ou de calcul d'une vitesse de consigne (V2) à atteindre à une position événement (E) ultérieure du véhicule (1), la vitesse de consigne étant strictement inférieure à une vitesse courante (Vego) du véhicule, puis
    - une étape (E4) de calcul d'une vitesse théorique (Vcs) dudit véhicule, puis
    - une étape (E5) de comparaison de la vitesse courante (Vego) dudit véhicule avec la vitesse théorique (Vcs), puis
    - une étape (E6) de gestion de la vitesse du véhicule comprenant:

        - une première sous-étape (E61) en roue libre ou en frein moteur dudit véhicule si la vitesse courante (Vego) dudit véhicule est comprise dans une plage de vitesse (P) autour de ladite vitesse théorique (Vcs),
        - une deuxième sous-étape (E62) d'action motrice dudit véhicule si la vitesse courante (Vego) du véhicule est strictement inférieure à ladite plage de vitesse,
        - une troisième sous-étape (E63) de freinage dudit véhicule si la vitesse courante (Vego) du véhicule est strictement supérieure à ladite plage de vitesse,
        puis

    - une étape (E7) de freinage du véhicule pour atteindre la vitesse de consigne (V2).

2.  Procédé de gestion selon la revendication précédente, **caractérisé en ce que** ladite première sous-étape (E61) est une étape de gestion de la vitesse du véhicule en boucle ouverte, et/ou **en ce que** ladite deuxième sous-étape (E62) est une étape de gestion de la vitesse du véhicule en boucle fermée, et/ou **en ce que** ladite troisième sous-étape (E63) est une étape de gestion de la vitesse du véhicule en boucle fermée.

3.  Procédé de gestion selon l'une des revendications précédentes, **caractérisé en ce que** ladite vitesse théorique (Vcs) est calculée en fonction d'une première constante de décéleration (acs) dudit véhicule, et en fonction d'une distance (Dego) séparant la position courante dudit véhicule de la position (E) ultérieure du véhicule à laquelle la vitesse de consigne (V2) doit être atteinte.

4. Procédé de gestion selon l'une des revendications précédentes, **caractérisé en ce qu'**il comprend une étape (E1) de régulation de la vitesse dudit véhicule pour maintenir une vitesse prédéfinie (V1) préalablement à l'étape (E2) de détection et/ou de de calcul d'une vitesse de consigne (V2).

5. Procédé de gestion selon l'une des revendications précédentes, **caractérisé en ce que** ladite vitesse théorique (Vcs) est une fonction décroissante de la position du véhicule (1).

6. Procédé de gestion selon la revendication précédente, **caractérisé en ce que** l'étape (E7) de freinage du véhicule est déclenchée dès que la vitesse courante du véhicule devient supérieure ou égale à une vitesse limite calculée en fonction d'une deuxième constante de décélération (abrk), et en fonction d'une distance (Dego) séparant la position courante dudit véhicule de la position (E) ultérieure du véhicule à laquelle la vitesse de consigne (V2) doit être atteinte.

7. Procédé de gestion selon l'une des revendications précédentes, **caractérisé en ce que** ladite plage de vitesse (Zcs) est définie comme l'ensemble des vitesses dudit véhicule dont la différence avec ladite vitesse théorique (Vcs) est inférieure ou égale à une valeur seuil (S) prédéfinie.

8. Procédé de gestion selon l'une des revendications précédentes, **caractérisé en ce qu'**une transition entre la première sous-étape (E61) et la deuxième sous étape (E62) est régie par une hystérésis, et/ou **en ce qu'**une transition entre la première sous-étape (E61) et la troisième sous étape (E63) est régie par une hystérésis.

9. Véhicule (1) automobile, **caractérisé en ce qu'**il comprend des moyens matériels (2, 3, 4, 5) et/ou logiciels configurés pour mettre en oeuvre le procédé de gestion selon l'une des revendications précédentes.

10. Produit programme d'ordinateur comprenant des instructions de code de programme enregistrées sur un support lisible par ordinateur pour mettre en oeuvre les étapes du procédé de gestion selon l'une quelconque des revendications 1 à 8 lorsque ledit programme fonctionne sur un ordinateur.


**Patentansprüche**

1. Verfahren zur Verwaltung der Verlangsamung eines Kraftfahrzeugs (1), **dadurch gekennzeichnet, dass** es enthält:

   • einen Schritt (E2) der Erfassung und/oder der Berechnung einer in einer späteren Ereignisposition (E) des Fahrzeugs (1) zu erreichenden Sollgeschwindigkeit (V2), wobei die Sollgeschwindigkeit strikt niedriger ist als eine aktuelle Geschwindigkeit (Vego) des Fahrzeugs, dann
   • einen Schritt (E4) der Berechnung einer theoretischen Geschwindigkeit (Vcs) des Fahrzeugs, dann
   • einen Schritt (E5) des Vergleichs der aktuellen Geschwindigkeit (Vego) des Fahrzeugs mit der theoretischen Geschwindigkeit (Vcs), dann
   • einen Schritt (E6) der Verwaltung der Geschwindigkeit des Fahrzeugs, der enthält:

      - einen ersten Teilschritt (E61) antriebslos oder mit Motorbremse des Fahrzeugs, wenn die aktuelle Geschwindigkeit (Vego) des Fahrzeugs in einem Geschwindigkeitsbereich (P) um die theoretische Geschwindigkeit (Vcs) herum liegt,
      - einen zweiten Teilschritt (E62) einer Antriebsfunktion des Fahrzeugs, wenn die aktuelle Geschwindigkeit (Vego) des Fahrzeugs strikt niedriger ist als der Geschwindigkeitsbereich,
      - einen dritten Teilschritt (E63) des Bremsens des Fahrzeugs, wenn die aktuelle Geschwindigkeit (Vego) des Fahrzeug strikt höher ist als der Geschwindigkeitsbereich,
      dann

   • einen Schritt (E7) des Bremsens des Fahrzeugs, um die Sollgeschwindigkeit (V2) zu erreichen.

2. Verwaltungsverfahren nach dem vorhergehenden Anspruch, **dadurch gekennzeichnet, dass** der erste Teilschritt (E61) ein Schritt der Verwaltung der Geschwindigkeit des Fahrzeugs in offener Schleife ist, und/oder dass der zweite Teilschritt (E62) ein Schritt der Verwaltung der Geschwindigkeit des Fahrzeugs in geschlossener Schleife ist, und/oder dass der dritte Teilschritt (E63) ein Schritt der Verwaltung der Geschwindigkeit des Fahrzeugs in geschlossener Schleife ist.

3. Verwaltungsverfahren nach einem der vorhergehenden Ansprüche, **dadurch gekennzeichnet, dass** die theoretische Geschwindigkeit (Vcs) abhängig von einer ersten Verzögerungskonstanten (acs) des Fahrzeugs und abhängig von einer Entfernung (Dego) berechnet wird, die die aktuelle Position des Fahrzeugs von der späteren Position (E) des Fahrzeugs trennt, in der die Sollgeschwindigkeit (V2) erreicht sein muss.

4. Verwaltungsverfahren nach einem der vorhergehenden Ansprüche, **dadurch gekennzeichnet, dass** es einen Schritt (E1) der Regelung der Geschwindigkeit des Fahrzeugs enthält, um eine vordefinierte Geschwindigkeit (V1) vor dem Schritt (E2) der Erfassung und/oder der Berechnung einer Sollgeschwindigkeit (V2) zu halten.

5. Verwaltungsverfahren nach einem der vorhergehenden Ansprüche, **dadurch gekennzeichnet, dass** die theoretische Geschwindigkeit (Vcs) eine abnehmende Funktion der Position des Fahrzeugs (1) ist.

6. Verwaltungsverfahren nach dem vorhergehenden Anspruch, **dadurch gekennzeichnet, dass** der Bremsschritt (E7) des Fahrzeugs ausgelöst wird, sobald die aktuelle Geschwindigkeit des Fahrzeugs höher als eine oder gleich einer Grenzgeschwindigkeit wird, die abhängig von einer zweiten Verzögerungskonstanten (abrk) und abhängig von einer Entfernung (Dego) berechnet wird, die die aktuelle Position des Fahrzeugs von der späteren Position (E) des Fahrzeugs trennt, in der die Sollgeschwindigkeit (V2) erreicht sein muss.

7. Verwaltungsverfahren nach einem der vorhergehenden Ansprüche, **dadurch gekennzeichnet, dass** der Geschwindigkeitsbereich (Zcs) als die Gesamtheit der Geschwindigkeiten des Fahrzeugs definiert wird, deren Unterschied zur theoretischen Geschwindigkeit (Vcs) geringer als ein oder gleich einem vordefinierter Schwellwert (S) ist.

8. Verwaltungsverfahren nach einem der vorhergehenden Ansprüche, **dadurch gekennzeichnet, dass** ein Übergang zwischen dem ersten Teilschritt (E61) und dem zweiten Teilschritt (E62) von einer Hysterese bestimmt wird, und/oder dass ein Übergang zwischen dem ersten Teilschritt (E61) und dem dritten Teilschritt (E63) von einer Hysterese bestimmt wird.

9. Kraftfahrzeug (1), **dadurch gekennzeichnet, dass** es Hardware- (2, 3, 4, 5) und/oder Softwareeinrichtungen enthält, die konfiguriert sind, das Verwaltungsverfahren nach einem der vorhergehenden Ansprüche durchzuführen.

10. Computerprogrammprodukt, das Programmcodeanweisungen enthält, die auf einem computerlesbaren Träger aufgezeichnet sind, um die Schritte des Verwaltungsverfahrens nach einem der Ansprüche 1 bis 8 durchzuführen, wenn das Programm auf einem Computer läuft.

**Claims**

1. Method for managing deceleration of a motor vehicle (1), **characterized in that** it comprises:

   • a step (E2) of detecting and/or computing a setpoint speed (V2) to be reached at a later event position (E) of the vehicle (1), the setpoint speed being strictly below a current speed (Vego) of the vehicle, then
   • a step (E4) of computing a theoretical speed (Vcs) of said vehicle, then
   • a step (E5) of comparing the current speed (Vego) of said vehicle with the theoretical speed (Vcs), then
   • a step (E6) of managing the speed of the vehicle, comprising:

      - a first sub-step (E61) in which said vehicle free-wheels or is braked via engine/motor braking if the current speed (Vego) of said vehicle is comprised in a speed range (P) about said theoretical speed (Vcs),
      - a second sub-step (E62) in which said vehicle is subjected to a motive action if the current speed (Vego) of the vehicle is strictly below said speed range;
      - a third sub-step (E63) in which said vehicle is braked if the current speed (Vego) of the vehicle is strictly above said speed range,
      then

   • a step (E7) of braking the vehicle to reach the setpoint speed (V2).

**2.** Managing method according to the preceding claim, **characterized in that** said first sub-step (E61) is a step of managing the speed of the vehicle in open-loop mode, and/or **in that** said second sub-step (E62) is a step of managing the speed of the vehicle in closed-loop mode, and/or **in that** said third sub-step (E63) is a step of managing the speed of the vehicle in closed-loop mode.

**3.** Managing method according to one of the preceding claims, **characterized in that** said theoretical speed (Vcs) is computed depending on a first deceleration constant (acs) of said vehicle, and depending on a distance (Dego) separating the current position of said vehicle from the later position (E) of the vehicle at which the setpoint speed (V2) must be reached.

**4.** Managing method according to one of the preceding claims, **characterized in that** it comprises a step (E1) of regulating the speed of said vehicle to maintain a predefined speed (V1) prior to step (E2) of detecting and/or computing a setpoint speed (V2).

**5.** Managing method according to one of the preceding claims, **characterized in that** said theoretical speed (Vcs) is a decreasing function of the position of the vehicle (1).

**6.** Managing method according to the preceding claim, **characterized in that** step (E7) of braking the vehicle is triggered as soon as the current speed of the vehicle becomes higher than or equal to a limit speed computed depending on a second deceleration constant (abrk), and depending on a distance (Dego) separating the current position of said vehicle from the later position (E) of the vehicle at which the setpoint speed (V2) must be reached.

**7.** Managing method according to one of the preceding claims, **characterized in that** said speed range (Zcs) is defined as the set of speeds of said vehicle the difference of which with said theoretical speed (Vcs) is smaller than or equal to a predefined threshold value (S) .

**8.** Managing method according to one of the preceding claims, **characterized in that** a transition between the first sub-step (E61) and the second sub-step (E62) is governed by a hysteresis and/or **in that** a transition between the first sub-step (E61) and the third sub-step (E63) is governed by a hysteresis.

**9.** Motor vehicle (1), **characterized in that** it comprises software and/or hardware means (2, 3, 4, 5) configured to implement the managing method according to one of the preceding claims.

**10.** Computer program product comprising program-code instructions stored on a computer-readable medium, for implementing the steps of the managing method according to any one of Claims 1 to 8 when said program is run on a computer.

EP 3 907 114 B1

[Fig. 1]

ART ANTERIEUR

[Fig. 2]

ART ANTERIEUR

[Fig. 3]

ART ANTERIEUR

[Fig. 4]

[Fig. 5]

[Fig. 6]

[Fig. 7]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2016121898 A